(19) Europäisches Patentamt
European Patent Office
Office européen des brevets

(11) Publication number: 0 234 807 B1

(12) EUROPEAN PATENT SPECIFICATION

(45) Date of publication of patent specification: 16.09.92

(51) Int. Cl.[5]: C22B 1/08, C22B 34/12

(21) Application number: 87301181.1

(22) Date of filing: 11.02.87

# (54) Selective chlorination of iron values in titaniferous ores.

(30) Priority: 14.02.86 US 829231

(43) Date of publication of application:
02.09.87 Bulletin 87/36

(45) Publication of the grant of the patent:
16.09.92 Bulletin 92/38

(84) Designated Contracting States:
BE DE ES FR GB IT NL

(56) References cited:
EP-A- 0 085 345
EP-A- 0 201 752
US-A- 2 852 362
EP-A- 0 128 440
AU-B- 495 120
US-A- 3 925 057

(73) Proprietor: E.I. DU PONT DE NEMOURS AND COMPANY
1007 Market Street
Wilmington Delaware 19898(US)

(72) Inventor: Glaeser, Hans Hellmut
11 Meadows Lane
Wilmington Delaware 19807(US)
Inventor: Reeves, James William
8 Wollaston Road
Wilmington Delaware 19803(US)

(74) Representative: Woodcraft, David Charles et al
BROOKES & MARTIN High Holborn House
52/54 High Holborn
London, WC1V 6SE(GB)

EP 0 234 807 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### 1. Technical Field

The present invention relates to processes for preparing titaniferous ore beneficiates. In particular, the present invention relates to processes for selectively chlorinating iron values in titaniferous ores to provide ferric chloride, which is then oxidized to provide chlorine for recycle and ferric oxide for disposal.

#### 2. Description of the Prior Art

Significant quantities of pigmentary titanium dioxide are produced by chlorination of titaniferous ores, e.g., rutile or ilmenite, to produce titanium tetrachloride ($TiCl_4$), which is subsequently oxidized. In this reaction, coke, chlorine, and a titanium-containing ore are reacted at temperatures ranging from 700° to 1200°C, typically in a fluidized bed reactor. The hot chlorination gases resulting from this reaction contain primarily titanium tetrachloride and iron chloride impurities, namely ferric chloride and ferrous chloride. Generally, iron chlorides are removed from the product stream by condensation.

Removal of iron chlorides from the chlorination gases is a significant problem in production of substantially pure titanium tetrachloride from certain ore feedstocks. Of the most common ore feedstocks, rutile contains about 90-96% titanium dioxide and 1 to 7% iron oxide. Ilmenite and mechanical concentrates of anatase, preferred feedstocks due to cost, contain 40-70% titanium dioxide and 20-60% iron oxide. Thus, iron chlorides make up a considerable portion of chlorination gases in ilmenite-based or anatase-based processes.

Although a portion of this iron chloride by-product stream can be diverted to other uses, a significant proportion must be disposed of by neutralization followed by landfilling or deep-well injection. The costs associated with safe disposal of iron chloride wastes are rising. Moreover, a significant quantity of potentially recoverable chlorine is lost when iron chloride wastes are discarded. These considerations have led to a search for alternative methods of separating iron from titaniferous ores.

Considerable effort has been expended in the development of ore enrichment, or beneficiation, processes, which have the common objective of removing iron values from titaniferous materials prior to the titanium tetrachloride production step.

Since iron reacts more readily with chlorine than titanium, iron values can be removed by selective chlorination followed by ferric chloride volatilization, leaving a titanium-enriched residue. Under appropriate conditions, substantially all iron can be removed before $TiCl_4$ production begins. The resulting beneficiate can then be further chlorinated to produce $TiCl_4$. Optionally, the ore can be oxidized with air at high temperature to convert substantially all iron to $Fe_2O_3$ prior to carbon-free selective iron chlorination. The processes disclosed by Australian Patent No. 242,474 and Ketteridge, "Chlorination of Ilmenite," Aust. J. Appl. Sci. 15:90 (1964) are examples of this approach.

One variation on the selective chlorination approach is disclosed by Australian Patent Specification 10957/53 (Hoechst). In this process, titanium oxide-containing material is fluidized inside a reaction zone heated to 800°C-1300°C with chlorine gas containing at most 30 volume percent inert gas, and the resulting ferric chloride is volatilized and removed, leaving a residue consisting essentially of titanium dioxide. A further variation, disclosed by German Offenlegungsschrift 3,210,729 (Hoechst), involves calcining the titanium oxide-containing material at 870°C to 1300°C, prior to the carbon-free selective chlorination step.

Alternative beneficiation processes involve solid-state reduction of ferric iron (+3) to the ferrous (+2) state, followed by hydrochloric or sulfuric acid leaching. Kahn, "Non-Rutile Feedstocks for the Production of Titanium," J. Metals, July 1984, p. 33, and Chen, U. S. Patent 3,825,419, (Benelite Corporation), disclose use of such processes in preparation of synthetic rutile ore concentrates.

Finally, several references are directed to beneficiation processes which include various combinations of solid state iron reduction and partial chlorination. Daubenspeck, U. S. Patent 2,852,362 (National Lead Company), describes a process in which iron values in titaniferous ores are first reduced to the ferrous state by reaction with a solid or gaseous reducing agent such as finely ground coke or carbon monoxide, at temperatures from 650°C to 1000°C. Second, additional carbon-containing material, for example, finely ground coke or carbon monoxide, is added to the reduced ore product, and the resulting mixture is chlorinated at a temperature from 600°C to 900°C.

Dunn, U. S. Patent 3,699,206, discloses a single-reactor reduction/chlorination process wherein ore is alternately contacted, for short intervals under fluidizing conditions, with carbon monoxide and chlorine in a

gas-solids reactor. Dunn, U. S. Patent 3,713,781, discloses a cross-flow fluid bed reactor for ore beneficiation, which permits alternate contacting of a moving fluid bed with carbon monoxide and chlorine.

Fukushima, "Mitsubishi Process for Upgrading Ilmenite and Chlorine Recirculation," in TMS-AIME Publication No. A74-48 (1974) describes an ore beneficiation process involving the following steps. First, ilmenite ore is heated under oxidizing conditions, producing rutile and pseudobrookite. Second, coke is added to the pre-oxidized ore in a fluidized bed, and reacted with chlorine at a temperature of at least 900°C, selectively chlorinating iron values to ferric chloride, which is removed as vapor. The resulting beneficiate material can then be subjected to magnetic separation and flotation processes to recover synthetic rutile for further processing. Ferric chloride produced in the selective chlorination step is reacted with oxygen at high temperatures. Ferric oxide and an off-gas mixture of chlorine and carbon dioxide result, from which chlorine can be recovered for recycle via a liquefaction step. U. S. Patent 3,803,287, U. K. Patent 1,471,198, and Japanese Patent Publication 58-39895 (all Mitsubishi Metals K.K.) are directed to various aspects of the foregoing process.

Technical difficulties such as bed defluidization, loss of $TiCl_4$, incomplete $Cl_2$ conversion, and unfavorable thermal balance associated with carbon-free chlorination have prevented commercialization of the above-described chlorination processes. Moreover, facilities for liquefaction of chlorine or condensation and revaporization of ferric chloride involve high levels of capital investment. Although reduction/acid leaching processes have been commercialized, their economies of operation are largely dependent upon inexpensive sources of acid for leaching. Furthermore, the foregoing processes largely do not address environmental considerations relating to disposal of ferric chloride or acid leachates.

## SUMMARY OF THE INVENTION

The present invention provides a process for removing iron values from titaniferous ores, comprising:

(a) contacting ore to be treated with a reducing atmosphere comprising one or more constituents selected from the group consisting of hydrocarbons, CO, and $H_2$, at a temperature from 700°C to 1100°C, in a reducing zone; 1100°C, in a reducing zone;

(b) continuously cycling a part of the ore being treated from the reducing zone to a chlorinating zone, and from the chlorinating zone to the reducing zone;

(c) contacting ore in the chlorinating zone with a molar excess of $Cl_2$, at a temperature from 600°C to 1000°C, in an atmosphere substantially free of carbon, thereby producing $FeCl_3$ vapor and a $TiO_2$ beneficiate;

(d) withdrawing the $FeCl_3$ vapor from the chlorinating zone and contacting it with oxygen, at a temperature from 500°C to 1200°C, to produce $Cl_2$ gas and a $Fe_2O_3$ waste stream;

(e) recycling $Cl_2$ gas to the chlorinating zone; and

(f) withdrawing the resulting $TiO_2$ beneficiate from the chlorinating zone.

## BRIEF DESCRIPTION OF THE DRAWINGS

FIG. 1 is a flow diagram depicting process flows involved in a preferred embodiment of the present invention.

FIGS. 2-4 are provided as an aid in understanding the disclosure of Examples 1 and 2 and Comparison A. FIG. 2 illustrates process flows involving a process of the present invention wherein iron is prereduced to ferrous iron prior to selective chlorination, while FIG. 3 illustrates flow where iron is prereduced to 50% elemental iron prior to selective chlorination. FIG. 4 illustrates flows involved in a comparison process wherein ore is heated but not reduced prior to selective chlorination.

Each drawing is discussed in additional detail below.

## DETAILED DESCRIPTION OF THE INVENTION

In a generalized aspect, the present invention provides a process involving selective chlorination of ferrous iron in ilmenite or anatase. The process is characterized by the elimination of carbon from the reaction wherein the reduced ore is chlorinated. In this process, iron in the ferric, or $Fe^{3+}$, state, in titaniferous ores is first reduced to the ferrous, or $Fe^{2+}$, state, with gaseous reductants (i.e., hydrocarbons, $H_2$, and CO), and then selectively chlorinated in a second reaction vessel, providing essentially complete $Cl_2$ conversion and negligible loss of titanium values. The resulting carbon-free $FeCl_3$ stream is then oxidized to recyclable $Cl_2$ without prior condensation of $FeCl_3$ or subsequent liquefaction of $Cl_2$. A continuous recycle stream between the ore reduction and chlorination stages is maintained to allow

essentially complete iron removal.

Reduction of ferric iron in ilmenite to ferrous iron is accomplished by contacting ore with a reducing atmosphere comprising one or more constituents selected from the group consisting of hydrocarbons, CO, and $H_2$, at a temperature from about 700°C to about 1100°C. Preferably, reduction temperatures are maintained from about 800°C to about 1000°C. In a preferred aspect, the reducing atmosphere is generated from combustion of fuel oil in the presence of air, since this method also serves to heat the ore being treated to reduction temperature. Alternatively, methane or natural gas combustion can supply the required reducing atmosphere. Preferably, reduction is carried out using ore of a particle size which allows fluidization (e.g., < 500 microns diameter).

The present invention contemplates two modes of prereduction. In the first, or preferred mode, substantially all iron values are prereduced to the ferrous state. In this mode, exit gases from the reduction reactor are monitored and flows of hydrocarbons and air controlled to provide an exit gas mixture having a molar ratio of $CO_2$ and $H_2O$ to other constituents within the range 0.1 to 0.95. This exit gas molar ratio is calculated as follows:

$$\frac{[CO_2] + [H_2O]}{[CO_2] + [H_2O] + [CO] + [H_2].}$$

In the second comtemplated prereduction mode, the recycle rate between the chlorinating and reducing zones is set to remove all oxygen during reduction, rather than by displacement with chlorine, in order to provide a prereduced product comprising iron in the ferrous state and iron in the metallic state.

The resulting reduced ore is then fed into a second fluidized bed reactor, where exothermic chlorination occurs with essentially complete $Cl_2$ conversion, in accordance with the following equation:

I: $3\ FeO + xTiO_2 + 1\text{-}1/2\ Cl_2 \rightarrow FeCl_3 + Fe_2O_3 + xTiO_2$

The foregoing chlorination reaction provides superior results to the following endothermic reaction which is known to be incomplete, providing less than 30 per cent $Cl_2$ conversion at 1000°C, and diminishing conversion with decreasing temperature:

$$\text{II: } Fe_2O_3 + xTiO_2 + 3\ Cl_2 \rightleftharpoons 2\ FeCl_3 + xTiO_2 + 1\text{-}1/2\ O_2$$

Chlorination is conducted at temperatures from about 600°C to about 1000°C, preferably from about 700°C to about 900°C. Most preferably, ore is selectively chlorinated at about 750°C to about 850°C. Chlorination is most effectively accomplished under fluidizing conditions. Carbon-containing materials are substantially excluded from the chlorination reactor to prevent loss of $TiCl_4$.

Since the reaction of equation (I), above, removes only about one-third of the iron in ilmenite as volatile $FeCl_3$, and since it generates $Fe_2O_3$, this is recycled to the reduction stage for additional oxygen removal. The size of the recycle stream must be sufficiently large to maintain a low iron content so that a $TiO_2$ beneficiate with low iron content can tbe withdrawn from the chlorination stage. Techniques for recycling of fluidizable solids between two fluidized beds, without mechanical valving, are known.

The resulting stream of ferric chloride vapor exiting the chlorinator is contacted with oxygen at a temperature from about 500°C to about 1200°C, preferably from about 900°C to about 1100°C, to provide a gas/solids stream containing $Cl_2$ and $Fe_2O_3$. This stream is flue-cooled, optionally with added scrub solids in the form of sand, and then separated in cyclone separators to provide a waste stream of solid $Fe_2O_3$, which is environmentally suitable for landfilling. The remaining stream of $Cl_2$ can then be recycled to the chlorinator.

Optionally, this ferric chloride oxidation step can be conducted according to the process disclosed by Reeves et al., U. S. Patent 4,174,381 (Du Pont).

The cyclic process of the present invention overcomes inefficient $Cl_2$ conversion and the requirement for external heating necessitated by chlorination of iron in unreduced ore. In contrast to selective iron chlorination with coke as a reductant, the process of the present invention provides a $FeCl_3$ vapor stream containing substantially no carbon oxide. Hence the $FeCl_3$ can be oxidized to recyclable $Cl_2$ without condensation of $FeCl_3$ prior to its oxidation and also without subsequent $Cl_2$ liquefaction for removal of carbon oxide from the recycle stream. In addition, coke-free iron chlorination is extremely selective,

avoiding essentially all $TiCl_4$ loss.

The process of the present invention results in production of essentially all $FeCl_3$. Therefore, process control problems attributable to $FeCl_2$ formation are avoided. $FeCl_2$ is higher boiling than $FeCl_3$, and therefore tends to condense in liquid form, interfering with fluidization.

Selective chlorination can be carried out at temperatures below those required for selective chlorination processes requiring in situ reduction with coke. This aspect of the present invention is particularly important in chlorination of Brazilian anatase, which contains significant concentrations of both iron and calcium. The process of this invention permits chlorination at temperatures below 781°C, the melting point of $CaCl_2$. Thus, waste $CaCl_2$ forms a fluidizable solid which can be removed from beneficiates by water leaching.

Referring now to FIG. 1, a flowchart is provided which depicts process flows involved in one embodiment of the present invention.

Titaniferous ore, which can be, for example, ilmenite or a titanium-bearing carbonatite such as Brazilian anatase, is comminuted to a particle size suitable for fluidization and introduced to fluidization reactor 4 via inlet 1. Air is introduced via manifold 3, to reactor 4, where it is mixed with heavy fuel oil, which is introduced into reactor 4 via inlet 2. This fuel/air mixture is ignited, and the resulting combustion reaction is balanced by regulation of fuel and air inputs to provide an internal temperature in reactor 4 of about 900°C.

Within reactor 4, ore to be treated is contacted with a mixture of $CO_2$ and CO that exits reactor 4 in a molar ratio of about 10:1. Excess gases are vented from reactor 4 by outlet 5. An exit stream 6 of reduced ore, comprising FeO and $TiO_2$, is continuously cycled from reduction reactor 4 to chlorinator 7, where it is contacted with $Cl_2$ gas at a temperature from about 700°C to about 800°C. A recycle stream 10 of partially chlorinated material is continously fed back to reduction reactor 4, where it is again contacted with a reducing atmosphere. A product stream of beneficiated ore is removed from chlorinator 7 via outlet 19.

A vapor flow 9 of $FeCl_3$ gas exits chlorinator 7 and is routed to oxidizer 12, where it is contacted at about 700°C to about 800°C with oxygen provided to oxidizer 12 via inlet 11. The resulting stream of $Fe_2O_3$ and $Cl_2$ exiting oxidizer 12 is mixed with scrub solids, for example, sand, provided from mixer 13, and then cooled in flue network 14 before gas/solids separation in cyclones 15. The resulting stream of cooled, inert $Fe_2O_3$ is discharged from cyclones 15 at outlet 16 and landfilled. The flow of $Cl_2$ gas exiting cyclones 15 is routed via conduit 17 to recycle blower 18, from which it is recycled to chlorinator 7 via inlet 8.

The following examples illustrate particular aspects of the present invention.

Examples 1 and 2 illustrate pilot plant-scale operation of processes involving preduction to ferrous iron or, in the case of Example 2, a mixture of ferrous and metallic iron, followed by chlorination. Comparison A illustrates a comparative process in which ferric iron is chlorinated. The following advantages are illustrated by comparison of Examples 1 and 2 with Comparison A. First, 100% $Cl_2$ conversions are possible. Second, recycle of large quantities of ore heated nearly to a "sticking" temperature are avoided. Third, costly, high temperature reduction to elemental iron is avoided. Fourth, high reducing gas conversion is possible, avoiding recycle. Fifth, a single-stage reducer-preheater can be employed. Finally, direct $FeCl_3$ feed to oxidation is feasible, avoiding the need for costly condensation and revaporization apparatus.

Example 3 provides calculated equilibrium conversions for chlorination of reduced and unreduced ilmenite ore. Examples 4-7 report the results of laboratory-scale chlorination experiments involving reduced and unreduced samples of Florida ilmenite and Brazilian anatase.

In the examples, all degrees reported are Celsius (°C), and all parts and percentages are by weight unless otherwise indicated.

## Example 1

Referring now to FIG. 2, a flowsheet is provided which indicates material flows involved in a process wherein ilmenite or other ore is preheated and iron values reduced to the ferrous state prior to selective chlorination.

Ore provided via inlet 1 is preheated and prereduced in a single stage fluid bed 10, by contact with combustion products derived from partial oxidation of a hydrocarbon fuel (fuel oil and $CH_4$ are contemplated). The resulting reduced ore, at a temperature of 1000°, is standpipe fed via stream 5 to a fluid bed chlorinator 11 at 1000°, where it is contacted with $Cl_2$ provided via inlet 7. Approximately 90% of iron values are removed as $FeCl_3$ vapor via outlet 9, and beneficiated ore concentrate is constantly withdrawn at outlet 8. A portion of the fluid bed is continuously recycled to preheater/reducer 10 via lift line 6. This recycle stream contains ferric iron that is again reduced. This recycle stream should be approximately 17 times the magnitude of the ore feed rate in order to remove all oxygen in the reduction step and achieve 90% iron chlorination.

A material balance for the numbered process streams indicated in FIG. 2 appears below. All indicated

values refer to units of kgs-mols/hr (lb.-mols/hr).

| Stream: | 1 | 2 | 3 | 4 | 5 | 6 | 7 | 8 | 9 |
|---|---|---|---|---|---|---|---|---|---|
| $TiO_2$ | 0.34 (0.75) | | | | 6.12 (13.50) | 5.78 (12.75) | | 0.34 (0.75) | |
| $Fe_2O_3$ | 0.104 (0.231) | | | | | 0.177 (0.391) | | 0.104 (0.023) | |
| FeO | | | | | 0.564 (1.244) | | | | |
| $CH_4$ | | 0.204 (0.450) | | | | | | | |
| $O_2$ | | | 0.26 (0.577) | | | | | | |
| CO | | | | 0.0186 (0.041) | | | | | |
| $CO_2$ | | | | 0.186 (0.409) | | | | | |
| $H_2O$ | | | | 0.416 (0.918) | | | | | |
| $H_2$ | | | | 0.037 (0.082) | | | | | |
| $N_2$ | | | 1.047 (2.308) | | | | | | |
| $Cl_2$ | | | | | | | 0.283 (0.624) | | |
| $FeCl_3$ | | | | | | | | | 0.189 (0.416) |
| Temp.(°) | 25 | 25 | 25 | 500 | 1000 | 1000 | 25 | 1000 | 1000 |

Example 2

In FIG. 3, a flowsheet is provided which indicates material flows involved in a process wherein ilmenite or other ore is preheated and iron values reduced to a mixture of 50% elemental iron and 50% ferrous iron with $H_2$ prior to selective chlorination.

Ore is preheated to 500° in a preheat furnace (not shown) and fed via inlet 1 to a three-stage counter-current $H_2$ reduction fluid bed reactor 10. Iron is reduced to 50% ferrous iron and 50% elemental iron. Full reduction to elemental iron is not shown because recycle between the chlorinator 11 and reducer 10 is necessary for an adequate thermal balance. This allows all oxygen removal in prereduction even in the iron is not all metallized. Equilibrium $H_2$ conversion in the 800° reducer 10 is estimated at 10%. Gas exiting via outlet 4 is heat-exchanged with inlet gas (2) in exchanger 12, is cooled to remove water at 13, recompressed at 14 and reheated via heat exchanger 12 and preheater 15 prior to recycle to reducer 10.

The recycle ore rate (6) is estimated at 3.5 times the feed rate in order to exchange heat from the exothermic chlorination and the endothermic reduction. The chlorinator 11 operates at 1000° with 100% $Cl_2$ conversion and 90% iron conversion, analogous to the process of Example 1.

A material balance for the numbered process streams indicated in FIG. 3 appears below. All indicated values refer to units of kgs-mols/hr (lb.-mols/hr).

| Stream: | 1 | 2 | 3 | 4 | 5 | 6 | 7 | 8 | 9 |
|---|---|---|---|---|---|---|---|---|---|
| $TiO_2$ | 0.34 (0.75) | | | | 1.51 (3.33) | 1.17 (2.58) | | 0.34 (0.75) | |
| $Fe_2O_3$ | 0.105 (0.231) | | | | | 0.0358 (0.079) | | 0.104 (0.023) | |
| FeO | | | | | 0.14 (0.31) | | | | |
| Fe | | | | | 0.14 (0.31) | | | | |
| $N_2$ | | | | | | | | | |
| CO | | | | | | | | | |
| $CO_2$ | | | | | | | | | |
| $Cl_2$ | | | | | | | 0.283 (0.624) | | |
| $FeCl_2$ | | | | | | | | | 0.189 (0.416) |
| $H_2$ | | 0.28 (0.621) | | 2.535 (5.59) | | | | | |
| $H_2O$ | | | 0.28 (0.621) | 0.28 (0.621) | | | | | |
| Temp(°): | 500 | 800 | 5 | 800 | 800 | 1000 | 25 | 1000 | 1000 |

Comparison A

In FIG. 4, a flowsheet is provided indicating material flows involved in a conventional process wherein ilmenite or other ore is preheated without reduction of iron values prior to selective chlorination.

Ore provided to fluid bed roaster 10 via inlet 1 is preheated by combustion of a hydrocarbon fuel (2) in air (3). The preheated ore is fed via line 5 to a fluid bed chlorinator 11 at 1000°, where 90% iron conversion is achieved at an estimated $Cl_2$ conversion of 20%. A recycle 6 of 45 times the ore feed rate is necessary to maintain the 1000° chlorinator temperature while operating the preheater at the 1100° maximum temperature. This case requires condensation of iron chloride for $Cl_2$ separation before ferric chloride oxidation. Liquefaction of $Cl_2$ would be necessary to remove $O_2$. In contrast, pure $FeCl_3$ can be fed directly to an oxidizer in the processes described in Examples 1 and 2.

A material balance for the numbered process streams indicated in FIG. 4 appears below. All indicated values refer to units of lb.-mols/hr.

| Stream: | 1 | 2 | 3 | 4 | 5 | 6 | 7 | 8 | 9 |
|---|---|---|---|---|---|---|---|---|---|
| $TiO_2$ | 0.34 (0.75) | | | | 15.78 (34.8) | 15.24 (33.6) | | 0.34 (0.75) | |
| $Fe_2O_3$ | 0.105 (0.231) | | | | 0.57 (1.26) | 0.56 (1.24) | | 0.105 (0.023) | |
| $O_2$ | | | 0.47 (1.04) | | | | | | 0.14 (0.31) |
| $N_2$ | | | 1.89 (4.16) | 1.89 (4.16) | | | | | |
| $CO_2$ | | | | 0.236 (0.52) | | | | | |
| $Cl_2$ | | | | | | | 1.41 (3.12) | | 1.134 (2.50) |
| $FeCl_3$ | | | | | | | | | 0.189 (0.416) |
| $H_2O$ | | | | 0.47 (1.04) | | | | | |
| $CH_4$ | | 0.236 (0.52) | | | | | | | |
| Temp(°): | 25 | 25 | 25 | 1100 | 1100 | 1000 | 25 | 1000 | 1000 |

Example 3

Table 1, below, provides molar equilibrium concentrations calculated for the reaction between chlorine and prereduced ilmenite ore ($FeO \cdot TiO_2$), as well as the reaction between chlorine and unreduced ilmenite ore ($Fe_2O_3 \cdot TiO_2$). Reduction of $FeO \cdot TiO_2$ can occur, for example, at 800-1000°, over a wide range of CO and $CO_2$ concentrations, in a suitable reactor.

The results presented in Table 1 indicate that reaction of prereduced ilmenite with $Cl_2$ results in essentially complete $Cl_2$ conversion; no unreacted $Cl_2$ needs to be recycled. All $Cl_2$ is converted to iron chloride and only negligible concentrations of $TiCl_4$ are formed. In contrast, where unreduced ilmenite ore is reacted with $Cl_2$, $Cl_2$ conversion is limited and highly temperature-dependent. At 600°, essentially no conversion is predicted, while 20% conversion is predicted at 1000°.Chlorination of unreduced ilmenite ore is hindered not only by incomplete $Cl_2$ conversion, but also by a highly endothermic heat of reaction when compared to chlorination of prereduced ilmenite. Therefore, superheating of reactant $Cl_2$ or external heating of the reaction vessel is required to chlorinate unreduced ore. These additional energy inputs are not required to chlorinate prereduced ilmenite.

Chlorine conversion with reduced ilmenite ore is essentially complete according to the following equation:

$$3\ FeO + xTiO_2 + 1\ 1/2\ Cl_2 \rightarrow FeCl_3 + Fe_2O_3 + xTiO_2.$$

However, only about one-third of the FeO in the reduced ilmenite ore is converted to $FeCl_3$ during the first reaction path since about two-thirds of the FeO is converted into $Fe_2O_3$ which is difficult to react with $Cl_2$. Recirculation of $Fe_2O_3 \cdot TiO_2$ to the reduction stage results in continuing reduction and chlorination until essentially all iron values are removed as $FeCl_3$ and a rutile beneficiate is obtained.

Table 1

| Calculated Equilibrium Conversion of $Cl_2$ with Prereduced and Unreduced Ilmenite (Products in mols at reaction temperature) | | | | | | |
|---|---|---|---|---|---|---|
| | $3\ FeO \cdot TiO_2 + 1.5\ Cl_2$ | | | $Fe_2O_3 \cdot TiO_2 + 3.0\ Cl_2$ | | |
| Reaction Temp.: | 600° | 800° | 1000° | 600° | 800° | 1000° |
| Products: | | | | | | |
| $Fe_2O_3 \cdot TiO_2$ | 1.00 | 1.00 | 1.00 | 0.994 | 0.950 | 0.796 |
| $TiO_2$ | 2.00 | 1.99 | 1.99 | 0.01 | 0.05 | 0.20 |
| $FeCl_3$(g) | 0.088 | 0.445 | 0.740 | 0.009 | 0.093 | 0.377 |
| $Fe_2Cl_6$(g) | 0.450 | 0.260 | 0.524 | 0.001 | 0.003 | 0.005 |
| $FeCl_2$(s) | 0.010 | 0.00 | 0.00 | 0.00 | 0.00 | 0.00 |
| $FeCl_2$(g) | <0.001 | 0.023 | 0.134 | <0.001 | <0.001 | 0.21 |
| $TiCl_4$ | <0.001 | 0.003 | 0.003 | <0.001 | <0.001 | 0.001 |
| $Cl_2$ | 0.005 | 0.015 | 0.075 | 2.98 | 2.85 | 2.40 |
| $O_2$ | 0.00 | 0.00 | 0.00 | 0.008 | 0.075 | 0.306 |
| $Cl_2$ Conversion (%): | 99.7 | 99.0 | 95.0 | 0.67 | 5.00 | 20.0 |

Example 4

A laboratory scale fluidization reactor was constructed, consisting of a silica tube fitted with a fritted silica disc, gas inlet and exit orifices, heating means, and means for introducing $N_2$ and $Cl_2$ gas to the tube at measured rates. The exit orifice was connected in gas-tight relation to a cold trap, which was connected in series to two $Cl_2$ gas traps, each containing a measured quantity of 12.5% KI solution.

100 g Florida ilmenite, analyzing 64.8% $TiO_2$, 27.7% $Fe_2O_3$, and 2.1% FeO, were placed in the reactor and heated to 800° in a stream of flowing $N_2$ gas. When the sample reached reaction temperature, gas flow to the reactor was switched to $Cl_2$ at 0.92 L/min. The silica tube was mechanically vibrated to ensure mixing

of the solid reactor charge. Unreacted $Cl_2$ in the exit gas was adsorbed in the KI traps, and unreacted, adsorbed $Cl_2$ was then determined by titration with 0.1N $Na_2S_2O_3$.

The foregoing procedure was repeated with the same ore following reduction at 900° in a stream of 2.3 L/min CO and 0.2 L/min $CO_2$. Under the latter conditions, $Fe_2O_3$ in ilmenite is reduced to $FeO \cdot TiO_2$, but not to metallic iron. As with the unreduced ore sample, unreacted $Cl_2$ in the exit gas was adsorbed in KI solution and subsequently titrated with 0.1N $Na_2S_2O_3$ solution.

The results obtained were dependent upon the oxidation state of the iron values in each sample. After 10 minutes reaction time with prereduced ore, 0.016 mols unreacted $Cl_2$ were detected in the gas adsorbers. Moreover, at the onset of each reaction, the flow of residual $N_2$ gas out of the reaction vessel (which was monitored using a gas bubbler at the reactor exit) ceased for at least 4 minutes. In addition, reduced pressure inside the reactor was observed upon contact with $Cl_2$, and copious amounts of $FeCl_3$ condensed on cold surfaces at the reactor outlet and in an empty trap located ahead of the gas adsorber.

When unreduced ore was tested under substantially similar conditions, 0.191 mols $Cl_2$ were detected in the gas adsorbers. In contrast to the experiments involving prereduced ore, gas flow did not stop upon switchover to $Cl_2$, and observed amounts of condensed $FeCl_3$ were minor.

The difference of 0.175 mols unreacted $Cl_2$ between experiments approximates the stoichimetric amount of $Cl_2$ required to convert 100 g prereduced ilmenite according to the following equation:

(1) $3\ FeO \cdot TiO_2 + 1\ 1/2\ Cl_2 \rightarrow Fe_2O_3 \cdot 3\ TiO_2 + FeCl_3$

After the initial reaction period of 10 minutes, unreacted $Cl_2$ was equal to 5-10% of the $Cl_2$ reactant with both unreduced and reduced Florida ilmenite. This relatively minor $Cl_2$ conversion can be explained by the following incomplete reaction:

(2) $Fe_2O_3 \cdot 3TiO_2 + 3\ Cl_2 \rightarrow 3\ TiO_2 + 2\ FeCl_3$

This experiment indicates that $Cl_2$ conversion with prereduced ilmenite is complete until essentially all $FeO \cdot TiO_2$ is consumed.

## Example 5

In this experiment, ilmenite ore was added to a preheated silica tube in a continuous stream of $Cl_2$. 100 g Florida ilmenite, having the same composition as the sample described in Example 4, was air-roasted for 1 hour at 800°. A silica tube reactor similar to that described in Example 4 was heated to 800°, and the reactor and exit gas line were filled with $Cl_2$ gas by feeding $Cl_2$ at a flow rate of about 0.5 L/min. The air-roasted ilmenite sample was then added to the reactor. As in Example 4, the tube was mechanically vibrated, and KI traps were employed to permit observation of the initial flow-through of unreacted $Cl_2$ and subsequent determination of the quantity of unreacted $Cl_2$. This procedure was repeated using 100 g Florida ilmenite ore which had been prereduced by heating to 900° for 1 hour in a stream of 2.3 L/min CO and 0.2 L/min $CO_2$. The prereduced ilmenite was employed in two trials. In one experiment, it was fed into the $Cl_2$-filled silica reactor after preheating it to 600°; in a second experiment, it was first preheated to 800°.

Upon addition of unreduced ilmenite at 800°, $Cl_2$ flow did not cease, but was reduced by about 5-10% due to the presumed reaction between $Cl_2$ and $Fe_2O_3$ as described in equation (2) of Example 4, above. When prereduced ilmenite was added to the reactor at 600°, $Cl_2$ flow completely ceased for about 8 minutes; at 800°, $Cl_2$ flow ceased for about 10 minutes. After this initial period, $Cl_2$ flow rapidly increased to a level approximating the feed rate. At 600°, $Cl_2$ flow was 1-3% below the feed rate. At 800°, $Cl_2$ flow was 5-10% below the feed rate, similar to the result obtained using unreduced ilmenite.

$Cl_2$ consumption with prereduced ilmenite at 600° or at 800°, during the initial period when no unreacted $Cl_2$ was observed, approximated stoichiometrically calculated consumption, within allowances for experimental error. Such error can be attributed to slight variations in $Cl_2$ feed rate, $Cl_2$ escape from the reaction apparatus when ilmenite samples were added, and/or possible $Cl_2$ consumption in reactions involving minor ore constituents, e.g., alkali earth elements. The results obtained indicated that $Cl_2$ conversion with prereduced ilmenite was complete in less than 4 seconds at temperatures as low as 600°, while $Cl_2$ conversion was highly incomplete at 800° with unreduced air-roasted ilmenite.

## Example 6

In a series of experiments similar to those described in Example 5, above, samples of reduced and

unreduced Brazilian anatase ore were reacted with flowing $Cl_2$ in a silica tube reactor. The Brazilian anatase sample employed analyzed as 55.4% $TiO_2$, 24.3% $Fe_2O_3$, 4.8% $P_2O_5$, 4.4% $Al_2O_3$, 1.6% CaO, and lesser quantities of minor constituents.

100 g of unreduced Brazilian ore was fed to a mechanically vibrated silica tube preheated to 600°, while a continuous flow of $Cl_2$ was maintained at about 0.28 L/min. As previously described, unreacted $Cl_2$ exiting the reactor was assayed by KI adsorption and titration with 0.1N $Na_2S_2O_3$. This procedure was repeated using ore prereduced by reaction for one hour at 900° in a stream of 2.3 L/min CO and 0.2 L/min $CO_2$.

Essentially no cessation of gas flow was observed when unreduced ore was added to the reactor. $Cl_2$ flow was initially reduced about 14%, but gradually increased to within 2-5% of the feed rate. In contrast, when reduced ore was fed to the reactor under similar conditions, $Cl_2$ flow essentially ceased for about 10 minutes before increasing to less than 2% of feed rate after 15 minutes. Again, calculation indicated that $Cl_2$ consumption approximated stoichiometric amounts when prereduced ore was reacted.

The efficient low temperature (600°) iron chlorination observed suggests that this process is particularly useful for exploitation of Brazilian anatase, which contains sufficient CaO to interfere with $TiO_2$ chlorination at higher temperatures due to formation of liquid $CaCl_2$. Previous studies have indicated formation of solid $CaCl_2$ at 600°, well below the melting point of $CaCl_2$ at 781°. Thus, $CaCl_2$ can be removed from anatase-derived $TiO_2$ beneficiates after selective iron chlorination by simple water leaching.

**Claims**

**1.** A process for removing iron values from titaniferous ores, comprising:
(a) contacting ore to be treated with a reducing atmosphere comprising one or more constituents selected from the group consisting of hydrocarbons, CO an $H_2$, at a temperature from 700° to 1100°C, in a reducing zone;
(b) continuously cycling a part of the ore being treated from the reducing zone to a chlorinating zone, and from the chlorinating zone to the reducing zone;
(c) contacting ore in the chlorinating zone with a molar excess of $Cl_2$, at a temperature from 600°C to 1000°C, in an atmosphere substantially free of carbon, thereby producing $FeCl_3$ vapor and a $TiO_2$ beneficiate;
(d) withdrawing the $FeCl_3$ vapor from the chlorinating zone and contacting it with oxygen, at a temperature from 500°C to 1200°C, to produce $Cl_2$ gas and a $Fe_2O_3$ waste stream;
(e) recycling the $Cl_2$ gas to the chlorinating zone; and
(f) withdrawing the resulting $TiO_2$ beneficiate from the chlorinating zone.

**2.** A process according to claim 1, wherein the reducing zone and chlorinating zone are maintained under fluidizing conditions.

**3.** A process according to claim 1 or claim 2 wherein the reducing atmosphere is generated by partial oxidation of a hydrocarbon fuel.

**4.** A process according to claim 3, wherein the reducing atmosphere contains CO, $CO_2$, $H_2$, and hydrocarbons provided to the reducing zone by combustion of fuel oil and air.

**5.** A process according to claim 3 wherein the reducing atmosphere contains CO, $CO_2$, $H_2$, and hydrocarbons provided to the reducing zone by combustion of methane or natural gas and air.

**6.** A process according to any one of the preceding claims wherein ore is contacted with the reducing atmosphere at a temperature from 800°C to 1000°C.

**7.** A process according to any one of the preceding claims wherein substantially all iron values are reduced to the ferrous state prior to chlorination.

**8.** A process according to claim 3 wherein reducing conditions are controlled to provide an exit gas mixture having a molar ratio of $CO_2$ and $H_2O$ to $CO_2$, $H_2O$, CO and $H_2$ from about 0.10 to about 0.95.

**9.** A process according to claim 2 wherein iron values are reduced to a mixture of metallic iron and ferrous iron.

**10.** A process according to claim 9 wherein substantially all oxygen is removed from ore in gases exiting the reducing zone.

**11.** A process according to claim 2 wherein ore is contacted with chlorine at a temperature from 700°C to 1000°C.

**12.** A process according to claim 2 wherein the ore to be treated is ilmenite.

**13.** A process according to claim 2 wherein the ore to be treated is anatase.

**Patentansprüche**

**1.** Verfahren zur Entfernung von Eisengehalten aus titanhaltigen Erzen durch
(a) Inberührungbringen des zu behandelnden Erzes mit einer reduzierenden Atmosphäre, die einen oder mehrere aus der aus Kohlenwasserstoffen, CO und $H_2$ bestehenden Gruppe ausgewählte Bestandteile enthält, bei einer Temperatur von 700° bis 1100°C in einer Reduktionszone;
(b) kontinuierliches Im-Kreis-führen eines Teils des in Behandlung befindlichen Erzes von der Reduktionszone in eine Chlorierungszone und aus der Chlorierungszone in die Reduktionszone;
(c) Inberührungbringen des Erzes in der Chlorierungszone mit einem molaren Überschuß an $Cl_2$ bei einer Temperatur von 600°C bis 1000°C in einer Atmosphäre, die im wesentlichen frei von Kohlenstoff ist, wobei $FeCl_3$-Dampf und ein $TiO_2$-Anreicherungsprodukt gebildet wird;
(d) Abziehen des $FeCl_3$-Dampfs aus der Chlorierungszone und Inberührungbringen desselben mit Sauerstoff bei einer Temperatur von 500°C bis 1200°C zur Erzeugung von $Cl_2$-Gas und einem $Fe_2O_3$-Abfallstrom;
(e) Rückführen des $Cl_2$-Gases in die Chlorierungszone; und
(f) Abziehen des resultierenden $TiO_2$-Anreicherungsprodukts aus der Chlorierungszone.

**2.** Verfahren nach Anspruch 1, worin die Reduktionszone und die Chlorierungszone unter Fluidisierungsbedingungen gehalten werden.

**3.** Verfahren nach Anspruch 1 oder 2, worin die reduzierende Atmosphäre durch partielle Oxidation eines Kohlenwasserstoff-Brennstoffs erzeugt wird.

**4.** Verfahren nach Anspruch 3, worin die reduzierende Atmosphäre CO, $CO_2$, $H_2$ und Kohlenwasserstoffe enthält, die durch die Verbrennung von Heizöl und Luft in der Reduktionszone bereitgestellt werden.

**5.** Verfahren nach Anspruch 3, worin die reduzierende Atmosphäre CO, $CO_2$, $H_2$ und Kohlenwasserstoffe enthält, die durch die Verbrennung von Methan oder Erdgas und Luft in der Reduktionszone bereitgestellt werden.

**6.** Verfahren nach einem der vorstehenden Ansprüche, worin das Erz bei einer Temperatur von 800°C bis 1000°C mit der reduzierenden Atmosphäre in Berührung gebracht wird.

**7.** Verfahren nach einem der vorstehenden Ansprüche, worin im wesentlichen der gesamte Eisengehalt vor der Chlorierung zu zweiwertigem Eisen reduziert wird.

**8.** Verfahren nach Anspruch 3, worin die Reduktionsbedingungen so gesteuert werden, daß sich beim Austritt eine Gasmischung mit einem molaren Verhältnis von $CO_2$ und $H_2O$ zu $CO_2$, $H_2O$, CO und $H_2$ von etwa 0,10 bis etwa 0,95 ergibt.

**9.** Verfahren nach Anspruch 2, worin der Eisengehalt zu einer Mischung aus metallischem Eisen und zweiwertigem Eisen reduziert wird.

**10.** Verfahren nach Anspruch 9, worin dem Erz im wesentlichen aller Sauerstoff über die Reduktionszone verlassende Gase entzogen wird.

**11.** Verfahren nach Anspruch 2, worin das Erz mit Chlor bei einer Temperatur von 700°C bis 1000°C in Berührung gebracht wird.

**12.** Verfahren nach Anspruch 2, worin das zu behandelnde Erz Ilmenit ist.

**13.** Verfahren nach Anspruch 2, worin das zu behandelnde Erz Anatas ist.

**Revendications**

**1.** Un procédé pour éliminer le fer de minerais titanifères, consistant à :
(a) mettre en contact le minerai à traiter avec une atmosphère réductrice comprenant un ou plusieurs constituants choisis dans le groupe formé par les hydrocarbures, CO et $H_2$, à une température de 700° à 1100°C, dans une zone de réduction ;
(b) faire circuler en continu une partie du minerai soumis au traitement de la zone de réduction à une zone de chloration, et de la zone de chloration à la zone de réduction ;
(c) mettre en contact le minerai présent dans la zone de chloration avec un excès molaire de $Cl_2$, à une température de 600°C à 1000°C, dans une atmosphère sensiblement exempte de carbone, pour produire ainsi une vapeur de $FeCl_3$ et un minerai enrichi en $TiO_2$ ;
(d) retirer la vapeur de $FeCl_3$ de la zone de chloration et la mettre en contact avec de l'oxygène, à une température de 500°C à 1200°C, pour produire du $Cl_2$ gazeux et un courant résiduaire de $Fe_2O_3$ ;
(e) recycler le $Cl_2$ gazeux vers la zone de chloration ; et
(f) retirer de la zone de chloration le minerai enrichi en $TiO_2$ résultant.

**2.** Un procédé selon la revendication 1, dans lequel la zone de réduction et la zone de chloration sont maintenues dans des conditions de fluidisation.

**3.** Un procédé selon la revendication 1 ou la revendication 2, dans lequel l'atmosphère réductrice est engendrée par oxydation partielle d'un combustible hydrocarboné.

**4.** Un procédé selon la revendication 3, dans lequel l'atmosphère réductrice contient CO, $CO_2$, $H_2$ et des hydrocarbures fournis à la zone de réduction par combustion de fioul et d'air.

**5.** Un procédé selon la revendication 3, dans lequel l'atmosphère réductrice contient CO, $CO_2$, $H_2$ et des hydrocarbures fournis à la zone de réduction par combustion de méthane ou de gaz naturel et d'air.

**6.** Un procédé selon l'une quelconque des revendications précédentes, dans lequel le minerai est mis en contact avec l'atmosphère réductrice à une température de 800°C à 1000°C.

**7.** Un procédé selon l'une quelconque des revendications précédentes, dans lequel sensiblement tout le fer est réduit à l'état ferreux avant la chloration.

**8.** Un procédé selon la revendication 3, dans lequel les conditions de réduction sont réglées de manière à produire mélange gazeux de sortie ayant un rapport molaire de $CO_2$ et $H_2O$ à $CO_2$, $H_2O$, CO et $H_2$ d'environ 0,10 à environ 0,95.

**9.** Un procédé selon la revendication 2, dans lequel le fer est réduit en un mélange de fer métallique et de fer ferreux.

**10.** Un procédé selon la revendication 9, dans lequel sensiblement tout l'oxygène est éliminé du minerai dans les gaz sortant de la zone de réduction.

**11.** Un procédé selon la revendication 2, dans lequel le minerai est mis en contact avec le chlore à une température de 700°C à 1000°C.

**12.** Un procédé selon la revendication 2, dans lequel le minerai à traiter est de l'ilménite.

**13.** Un procédé selon la revendication 2, dans lequel le minerai à traiter est de l'anatase.

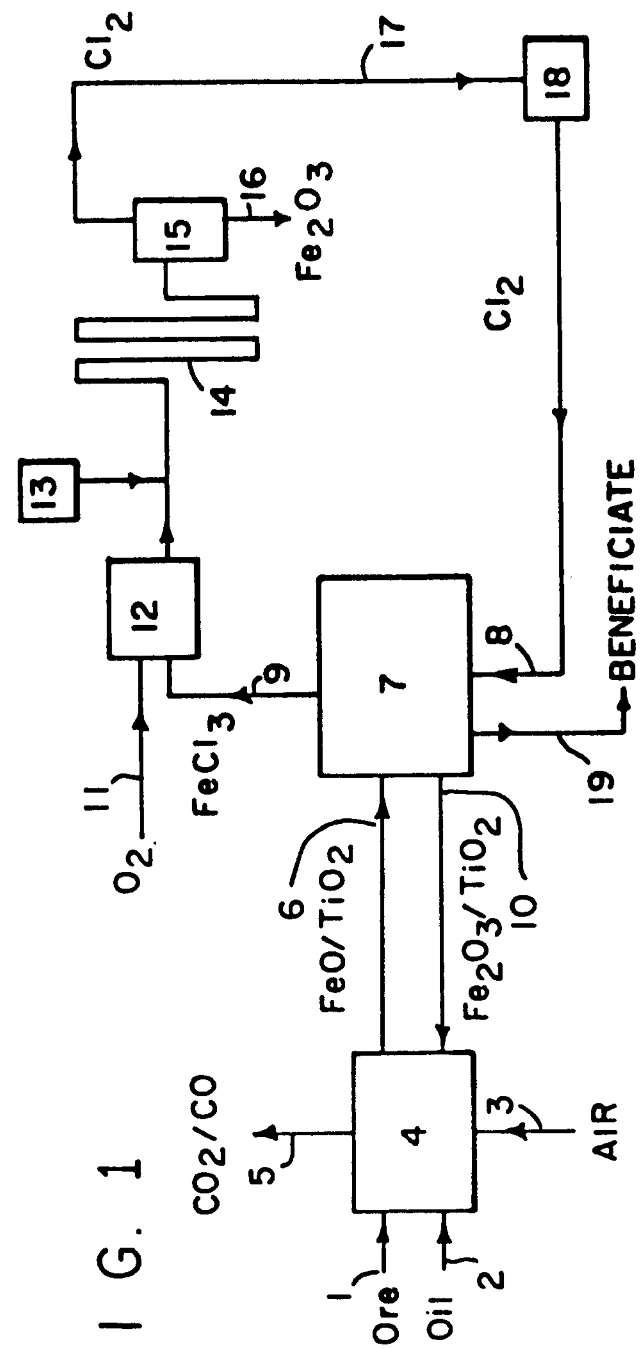
Ore
Oil
AIR
CO2/CO
FeO/TiO2
Fe2O3/TiO2
FeCl3
O2
BENEFICIATE
Cl2
Fe2O3
Cl2

FIG. 1

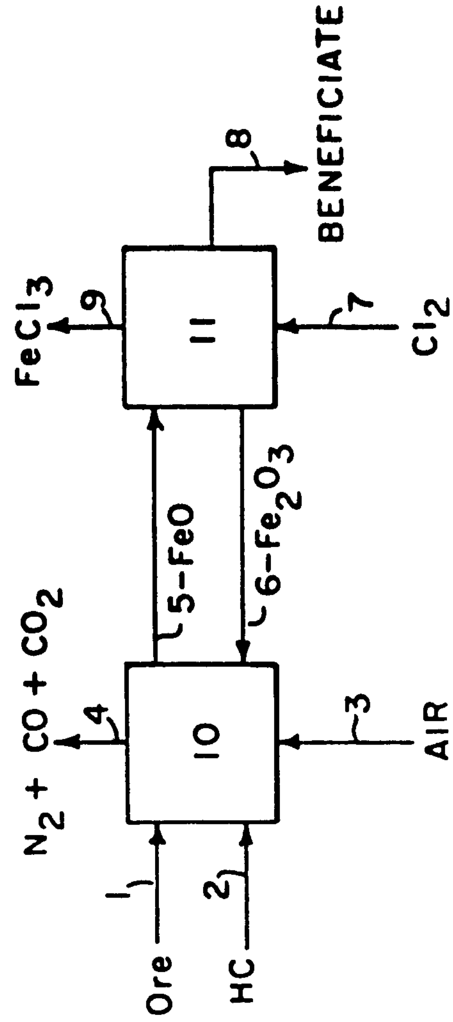
Ore
HC
AIR
N2 + CO + CO2
5-FeO
6-Fe2O3
FeCl3
Cl2
BENEFICIATE

FIG. 2

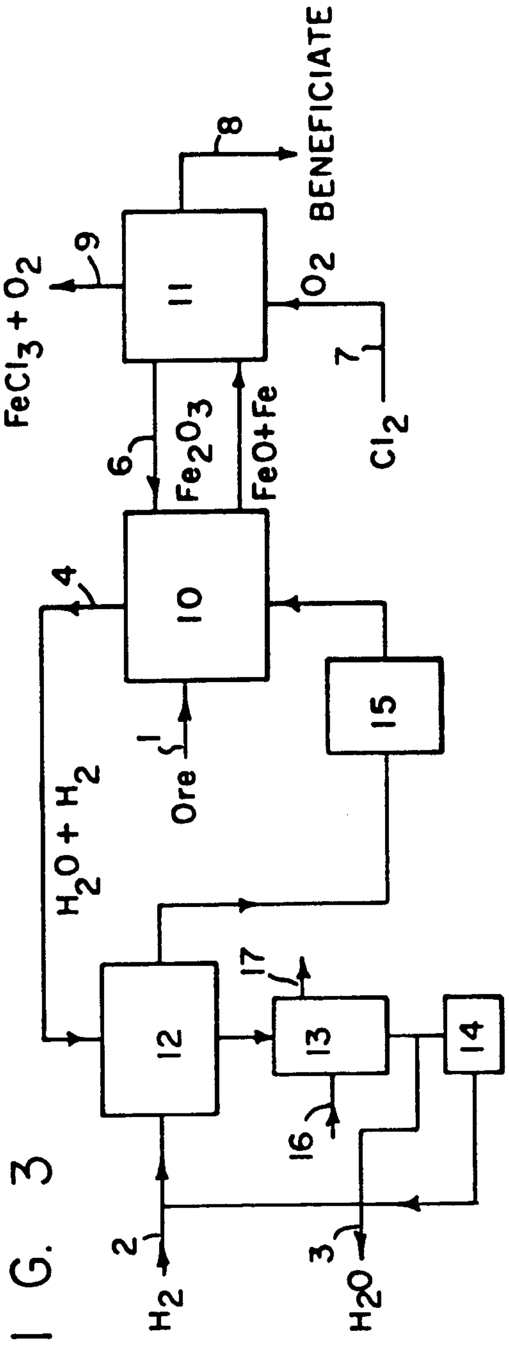

$FeCl_3 + O_2$
9
11
8
BENEFICIATE
$O_2$
7
$Cl_2$
6
$Fe_2O_3$
FeO+Fe
4
10
1
Ore
15
$H_2O + H_2$
12
13
14
17
16
2
$H_2$
3
$H_2O$


FIG. 3

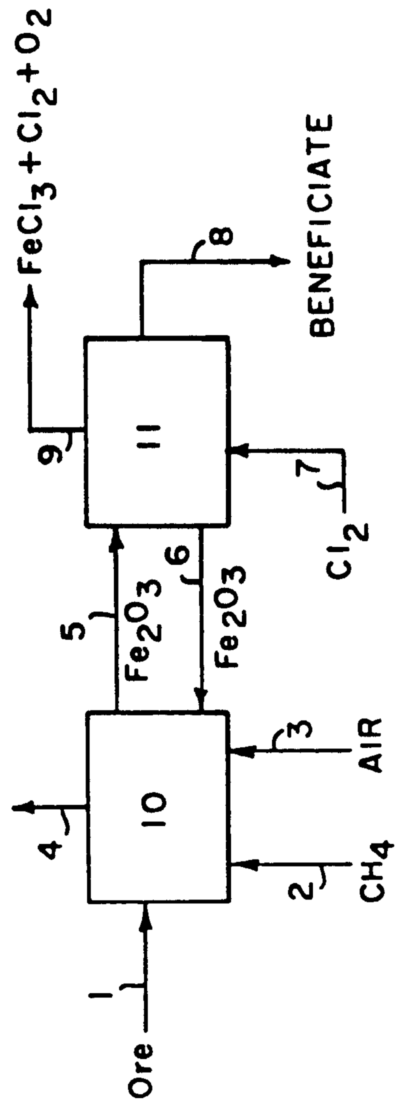

$FeCl_3 + Cl_2 + O_2$
BENEFICIATE
8
9
11
7
$Cl_2$
5
$Fe_2O_3$
6
$Fe_2O_3$
10
4
3
AIR
2
$CH_4$
1
Ore


FIG. 4